Europäisches Patentamt

European Patent Office

Office européen des brevets

(19)

(11) Publication number: **0 191 863**
**A1**

(12) # EUROPEAN PATENT APPLICATION
published in accordance with Art. 158(3) EPC

(21) Application number: 85903708.7

(22) Date of filing: 24.07.85

Data of the international application taken as a basis:

(86) International application number:
PCT/JP85/00421

(87) International publication number:
WO86/01046 (13.02.86 86/04)

(51) Int. Cl.⁴: **H 01 S 3/16**

(30) Priority: 30.07.84 JP 157490/84

(43) Date of publication of application:
27.08.86 Bulletin 86/35

(84) Designated Contracting States:
DE FR GB NL

(71) Applicant: HITACHI, LTD.
6, Kanda Surugadai 4-chome Chiyoda-ku
Tokyo 100(JP)

(72) Inventor: KOMATSUBARA, Kiichi
18-13, Enokicho Tokorozawa-shi
Saitama-ken 359(JP)

(74) Representative: Calderbank, Thomas Roger et al,
MEWBURN ELLIS & CO. 2/3 Cursitor Street
London EC4A 1BQ(GB)

(54) RADIANT RAY GENERATOR.

(57) A device for obtaining radiant rays, especially, coherent X-rays by using an inter-layer compound in which inter-layer molecular layers are inserted among the layers of stratified crystals, such as graphite monocrystals. In this device, such an inter-layer compound is irradiated with exciting energy, such as X-rays and an electron beam to obtain coherent radiant rays having a wavelength peculiar to the elements which constitute the inter-layer molecules. This enables a medical and industrial examining-measuring instrument, which has an accuracy higher than that of a conventional device of this kind, to be used practically.

*FIG. 2*

Croydon Printing Company Ltd.

- 1 -

0191863

DESCRIPTION:

Technical Field:

This invention relates to an apparatus useful for generating coherent radiation, particularly coherent X-rays.

Background Art:

The possibility of generating coherent light having a short wave-length has been discussed recently, and several proposals have been made for X-ray lasers, for examples. An example of the prior art using a gas is disclosed in Japanese Patent Publication No. 42507/1980, but an apparatus of this kind has not yet been put into practical application because the gas is not easy to handle. The general state of art relating to X-ray lasers is described in the transactions of Japanese Physics Society, Vol. 31, No. 8(1976), p.p. 640 - 641, but none of the prior art systems have been entirely satisfactory.

Disclosure of Invention:

It is an object of the present invention to provide a radiation system and method for coherent radiation, which is based upon a novel principle.

The coherent radiation method in accordance with the present invention uses an intercalation compound, and

0191863

its fundamental construction is as follows.

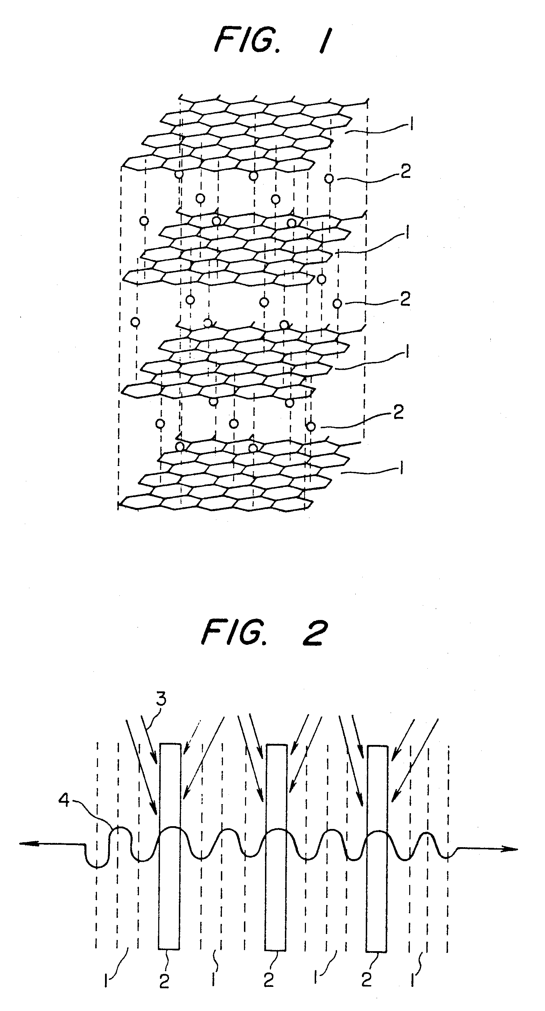

An intercalation compound layer having a structure in which atoms or molecules of a different kind called "intercalant" 2 are inserted in the layers of layered basic crystal 1 as depicted typically in Fig. 1, is prepared. A typical example of the intercalant crystal is a graphite intercalation compound (called simply "GIC"). Fig. 1 is a conceptual view of the intercalation compound using GIC by way of example.

The intercalant described above exhibits fluorescent light excitation when irradiated by an exciting beam from outside, and the layered basic crystal is selected in such a manner that it is transparent to the electromagnetic wave emitted from the intercalant.

Typical examples of such intercalation compounds are GIC using a chloride such as $AlCl_3$ or $SbCl_5$ molecular compound as the intercalant.

When the exciting beam is radiated to the layer surface of the intercalation compound thus prepared from a direction parallel to the layer plate, the electrons of the intercalant are excited, are then concentrated in the layered basic crystal and thereafter shift again to the intercalant in the form of indirect transition. Then, an electromagnetic wave such as fluorescent X-rays in the intercalant (in other words, fluorescent photons) are generated.

In this case, the standing wave of the fluorescent photons can be generated by making the relaxation time $\tau_R$ of the indirect transition longer than the transition speed $\tau_L$ of the fluorescent photons between the intercalant layers.

Fig. 2 is a schematic view showing the state of emission of the coherent radiation. Reference numeral 1 represents the layered basic crystal; 2 is the intercalant; and 3 is the exciting beam from outside. The standing wave of the fluorescent photons is generated as represented by reference numeral 4, and this standing wave is super-radiated so as to obtain coherent radiation.

Brief Description of Drawings:

Fig. 1 shows a model of an intercalation compound;

Fig. 2 is an explanatory view useful for explaining the light emission mechanism of a radiation system in accordance with the present invention;

Fig. 3 shows a model of GIC using a chloride as an intercalant;

Fig. 4 shows an electron band structure of GIC using a chloride as an intercalant;

Fig. 5 shows an atomic arrangement of the intercalant;

Fig. 6 shows the relation between the number of pumping photons and the number of excited photons;

Fig. 7 shows a state in which the system of the present invention is mounted in practice;

Fig. 8 is an explanatory view useful for explaining the production method of GIC; and

Fig. 9 shows an example of an emission spectrum.

BEST MODE FOR CARRYING OUT THE INVENTION:

The present invention will be described in detail because it is based upon an entirely novel light emission principle.

The following description will deal with GIC using, as the intercalant, a molecular layer of a chloride the intercalation compound by way of example.

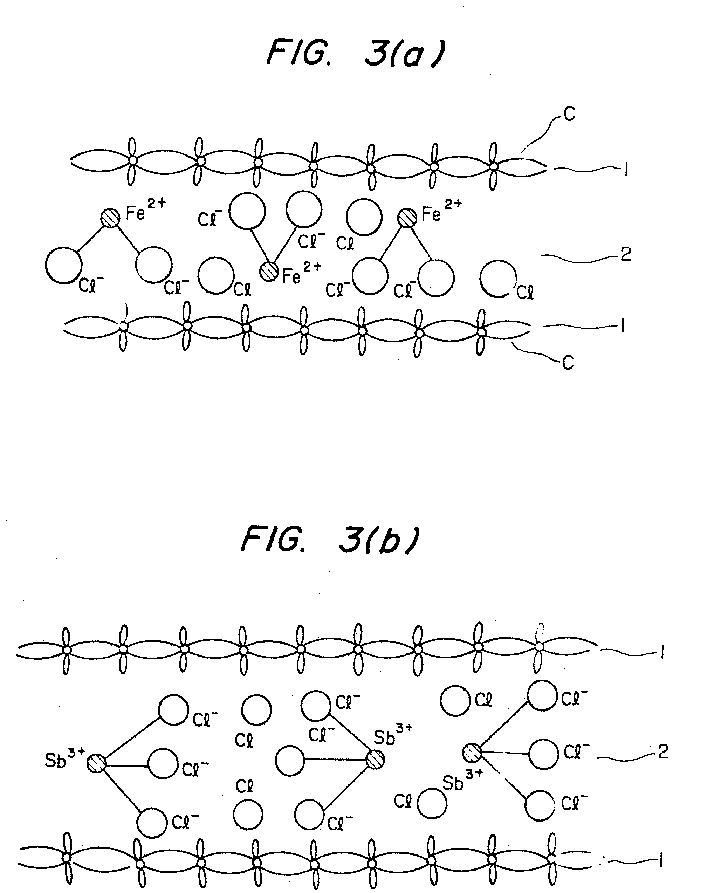

When $FeCl_3$ is the intercalant 2, $FeCl_3$ in the two-dimensional layered molecular structure is inserted into every two to five layers of laser graphite as depicted in Fig. 3(a). When $SbCl_5$ is the intercalant 2, on the other hand, it is inserted as a three bonding molecular atomic crystal as shown in Fig. 3(b). If the intercalant is inserted into each layer of the laser graphite, the intercalant assumed a so-called liquid phase, and if it is inserted into at least every six layers, it enters a gaseous phase. In either case, the object of the present invention cannot be accomplished. However, if the intercalant is inserted every two to five layers, stable GIC can be obtained because the intercalant becomes an acceptor type of man-made layered crystal in the case of the chloride and fluoride.  The form in which intercalant is inserted can be controlled by the treating temperature when the intercalant is inserted by heat-treating the graphite crystal in the gas atmosphere of the chloride.

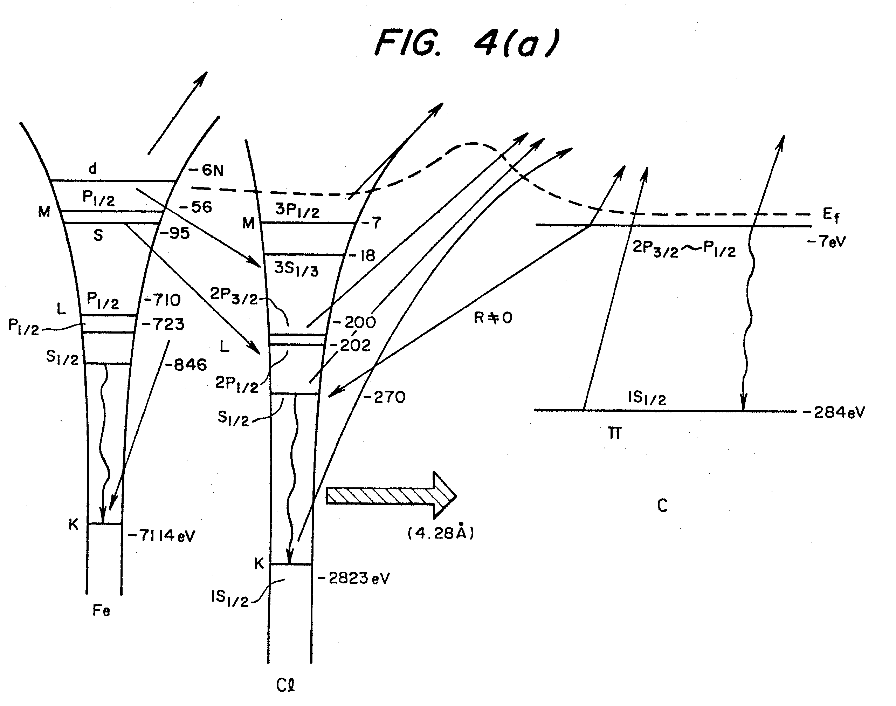

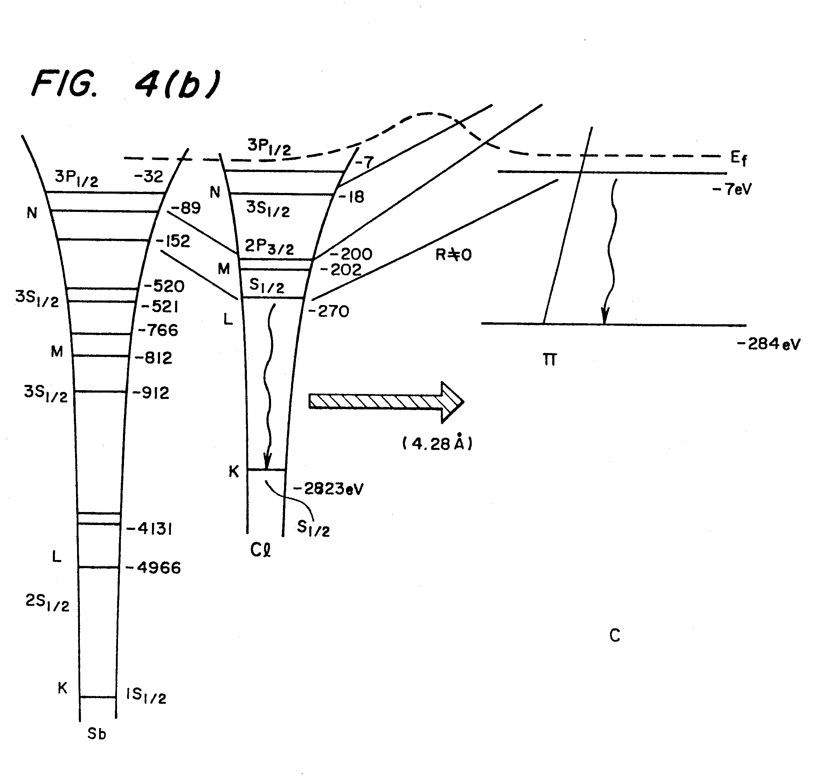

The electron band structure of such an acceptor type GIC is shown in Figs. 4(a) and 4(b).  Fig.4(a) shows the GIC where $FeCl_3$ is used as the intercalant (generally expressed as $C_{12.5}FeCl_3$) and Fig. 4(b) shows the GIC where $SbCl_5$ is used as the intercalant (generally expressed as $C_{51}SbCl_5$).

In the case of $SbCl_5$-GIC, the electrons at the L, M and N levels of the Cl atoms are excited to the levels close to the Fermi level of the graphite layer by the stimulus of the radiated beam (the X-ray, for example in this case).  In this manner, the electrons close to the Fermi level of the graphite layer increase due to the exciting X-rays, and then the electrons shift to the L level of the Cl atom.  Thus, the excitation electrons assume the form of a so-called indirect transition.  Therefore, the time constant for the relaxation of the excited electrons becomes about $10^{-10}$ sec.

On the other hand, the following energy propagation speed is necessary in order for the fluorecent X-rays due to the L' - K transition of the Cl atoms of $SbCl_5$  to

excite the K level electrons of the adjacent electrons to the L level:

$$\tau_t = \frac{R}{C} \approx \frac{5 \times 10^{-8}}{3 \times 10^{-10}} \cong 1.7 \times 10^{-18} \ (\text{sec})$$

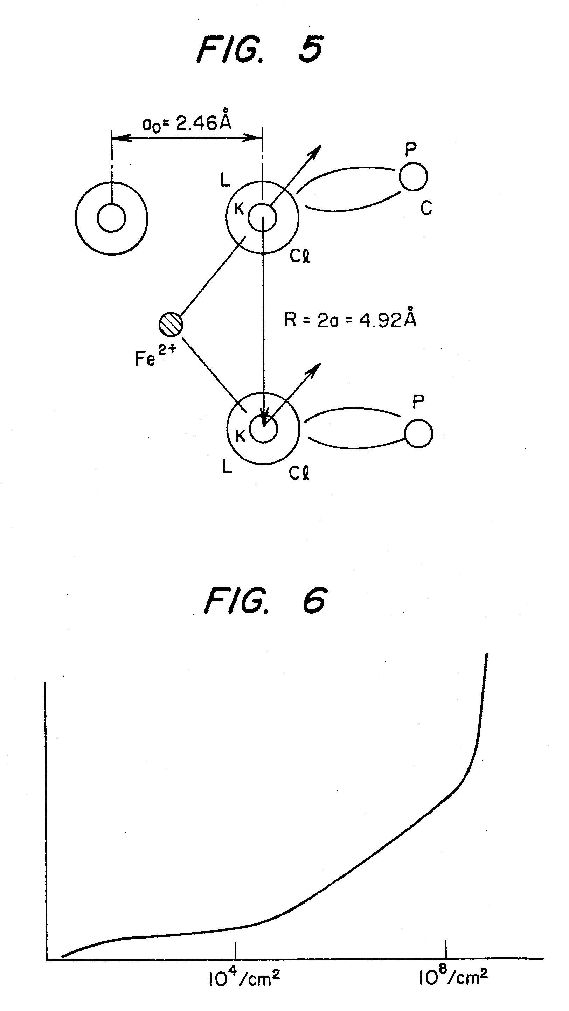

Fig. 5 shows the atom arrangement in the intercalant (in the case of $FeCl_3$ as the intercalant) which is to be taken into consideration when calculating the energy propagation speed.

This $\tau_t$ (that is, the time constant of $C_{LP3/2} - Cl_{LP}$ transition) is shorter than the relaxation time of the exciting electrons described already. As described already, therefore, the electrons at the L, M and N levels due to the radiation beam exist close to the Fermi level of the graphite layer due to the excitation.

The relaxation time ($\tau_R$) of $Cl$ to the L level due to this indirect transition of the electron is as follows:

$$\tau_R \geq \tau_t$$

Therefore, the $SbCl_3$ atoms in the layer form an atom group causing a kind of plasma oscillation due to the dipole-dipole interraction between the dipoles. The vector of the macroscopic dipoles generated by the atom group is not so fast as the dipole-dipole interraction of the single atom, and since the indirect interraction of the exciting electrons is applied, the relaxation time $\tau_s$ from the excitation state is great, longer than the transition time ($\tau_L$) of the fluorescent photons travelling between the intercalant layers (gap L). Therefore, a cavity standing wave is generated between the layers by an inter-layer resonator in the Z direction. An X-ray standing wave having a wavelength of 4.28 $\overset{\circ}{A}$ is generated by the macroscopic-dipole-microscopic-dipole interraction occurring in the molecules between the intercalant layers due to the L - K transition of $C\ell$. Thus, GIC becomes a kind of cavity, and when the emission of the fluorescent X-rays of the L - K transition of $C\ell$ increases due to the radiation beam from outside, the power of the cavity standing wave increases and the real and imaginary portions of the apparent dielectric function of the intercalant layer become equal:

$$\epsilon = \epsilon_o (1 - \epsilon' + i\epsilon'')$$

that is,

$$1 - \epsilon' = \epsilon''$$

Therefore, it is believed that $\epsilon = \epsilon_o\{1 - (1 - i)\epsilon''\}$, and the dielectric function becomes a pseudo-dielectric function.

In this case, the fluorescent photons cause pseudo-total reflection. When the luminance of the radiation beam increases, the power of the standing wave increases and $\epsilon''$ becomes zero ($\epsilon'' = 0$) and this standing wave causes pulse-like super-radiation. This super-radiation occurs when the luminance of the external pumping photons

$(0.8 \overset{\circ}{A} \sim 3 \overset{\circ}{A})$ reaches about $10^8/cm^2$.

Fig. 6 shows the relation between the number of pumping photons and the number of excited photons. When the pumping photons are $2x10^4/cm^2$, the afore-mentioned $\gamma$s increases due to the macroscopic dipole correlation of the dipoles on the basis of the dipole-dipole correlation in the intercalant molecular group, and the number of excited fluorescent photons of $Cl$ increases non-linearly with respect to the luminance of the external stimulating X-rays. Coherent radiation is super-radiated in the region expressed as the inter-layer resonance in Fig. 6.

Although the description given above deals with GIC using the chloride as the intercalant by way of example, it is possible, in principle, to use a fluoride (e.g., $Fe_2F_3$) or an oxide (e.g., $HNO_3$) as the intercalant. In such a case, the radiation due to the K - L line of F or O is conceivable.

In either case, since coherent light is that which is within a soft X-ray range of a wavelength of 5.56 $\overset{\circ}{A}$ and 12.84 $\overset{\circ}{A}$, it decreases in air. Therefore, the operation must be carried out in a vacuum.

The acceptor type of GIC is excellent as the radiation material in a ultraviolet — soft X-ray — hand X-ray range.

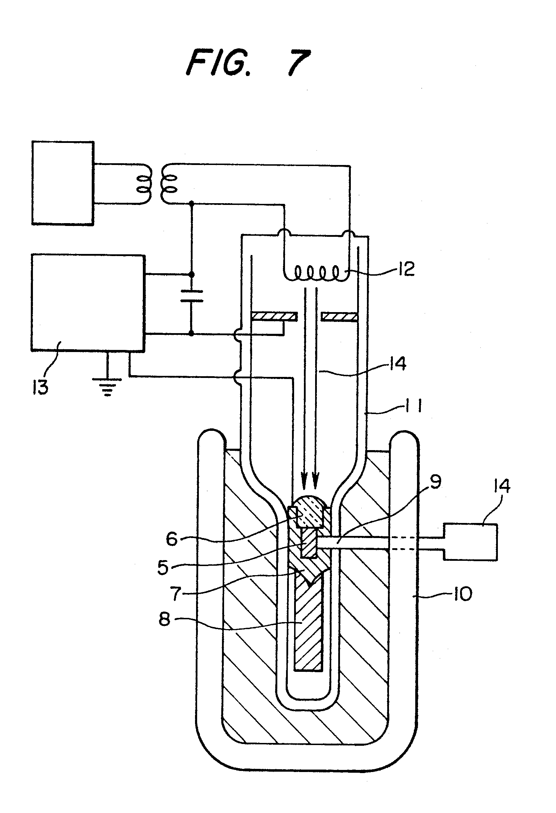

Fig. 7 is an explanatory view showing an actual example of the radiation system in accordance with the present invention. Reference numeral 5 represents the intercalant compound crystal that has so far been described, and reference numeral 6 represents a plate for generating a radiation beam, which is a target of Cr or Cu, for example. Reference numeral 7 represents a holder members described above, which is a lead cylinder for cooling. Reference numeral 14 represents a sample holder, and reference numeral 9 represents a take-out window of the radiation, which is fomred on the holder. The X-ray is radiated to a sample through this window. Reference numeral 8 represents a cooling rod, and Cu or Pb is used for the rod. Reference numeral 10 represents a cooling vessel, and liquid nitrogen is placed into the vessel.

A high energy electron beam is radiated to a Cr or Cu target represented by reference numeral 6 to generate characteristic X-rays. To generate photons of a high density, the photons are converged to an intercalant graphite having a 1 mm-square. To generate photons by characteristic X-rays of high density, acceleration energy of electrons is made at 50 kV to 200 kV, and the target itself is cooled.

An arrangement is made so that the number of excited photons by the characteristic X-rays $10^{7 \sim 8}/cm^2$ is radiated to a 1 $mm^2$ graphite surface.

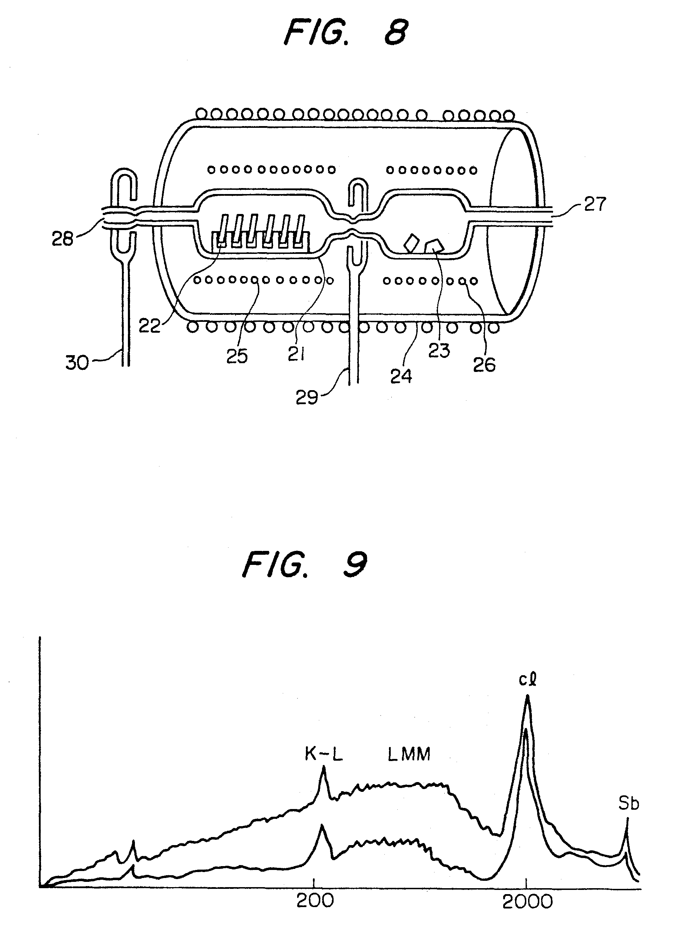

Fig. 8 is a schematic view of a furnace for inserting the intercalant into the graphite. Reference numeral 21 represents a glass tube, in which predetermined amounts of graphite 22 and intercalant material 23 are sealed. Reference numeral 24 represents the furnace whose entire temperature is controlled to a suitable temperature. A heater 25 keeps the graphite at a necessary temperature, while a heater 26 evaporates the necessary molecules from the intercalant. A gas is sent from a port 27 to carry the vapor by the graphite, and reference numeral 28 represents a gas outlet. After a suitable temperature condition is attained, the glass tube is sealed by burners 29, 30.

The following is an example which uses $SbCl$ as the intercalant.

A 4 mm-square, 2mm-thick graphite plate is prepared, and $SbCl_5$ as the intercalant is inserted. The apparatus used is such as shown in Fig. 8, and its summary is described already. To produce a high quality intercalant-graphite, it is necessary to precisely establish the structure of the furnace, the temperature control condition, the time condition and the vapor pressure condition.

The condition of the intercalant can be controlled by the temperature control as described already. In this case, the intercalant is suitably inserted into every three to five graphite layers within a temperature range of 350°C ± 10°C. In the case where the intercalant is inserted into every five layers, for example, the gaps between the intercalant layers are (3.35 x 5 $\overset{o}{A}$). Here, the graphite gap is assumed to be 3.35 $\overset{o}{A}$. The intercalant gap (L) is about 16.75 $\overset{o}{A}$. The GIC crystal thus prepared is then fitted t a metallic holder. Needless to say, the GIC crystal is fitted in such a fashion that the surface of the GIC layer faces the window of the holder.

The GIC is fitted to the apparatus shown in Fig. 7 and is then cooled by liquid nitrogen. A voltage greater than 50 kV is applied to radiate a high energy electron beam 14 to the Cr or Cu plate 6 so as to generate $CrK_\alpha$ or $CuK_\alpha$ characteristic X-rays. Using the characteristic X-rays as the pumping X-rays, photons in the number of $10^{7\sim8}/\text{m}^2$ are generated, and after the target is shaped in a lens-like shape, $10^{9\sim10}/\text{cm}^2$ of photons are radiated to a 1 mm-square sample so as to generate fluorescent X-rays between the intercalant layers.

Fig. 9 shows an example of the emission spectrum.

INDUSTRIAL APPLICABILITY:

Since the present invention can easily provide coherent radiation in a vacuum UV − soft X-ray − hard X-ray range, the present invention makes it possible to accomplish inspection and measuring instruments for medical and industrial use having higher accuracy than the prior

art apparatuses.

0191863

WHAT IS CLAIMED IS:

1. A radiation system characterized by including at least the following members:

an intercalant causing fluorescent light excitation upon being radiated by an exciting beam;

an intercalant crystal having a transparent basic crystal for the pumping X-rays; and

means for radiating said exciting beam to said intercalant crystal.

2. The radiation system as defined in claim 1 wherein said intercalant crystal is a graphite intercalant crystal.

3. The radiation system as defined in claim 1 or 2 wherein said intercalant crystal is of an acceptor type.

## FIG. 1

## FIG. 2

FIG. 3(a)

FIG. 3(b)

FIG. 4(a)

FIG. 4(b)

# FIG. 5

$a_0 = 2.46\text{Å}$

$R = 2a = 4.92\text{Å}$

$Fe^{2+}$

# FIG. 6

$10^4/cm^2$    $10^8/cm^2$

FIG. 7

0191863

21/21

0191863

## FIG. 8

## FIG. 9

# INTERNATIONAL SEARCH REPORT

International Application No. PCT/JP85/00421 **0191863**

## I. CLASSIFICATION OF SUBJECT MATTER (if several classification symbols apply, indicate all) ³

According to International Patent Classification (IPC) or to both National Classification and IPC

Int. Cl$^4$  H01S 3/16

## II. FIELDS SEARCHED

| Minimum Documentation Searched ⁴ | |
|---|---|
| Classification System | Classification Symbols |
| IPC | H01S 3/00, 3/14-3/17 |

Documentation Searched other than Minimum Documentation
to the Extent that such Documents are Included in the Fields Searched ⁵

| | |
|---|---|
| Jitsuyo Shinan Koho | 1964 - 1985 |
| Kokai Jitsuyo Shinan Koho | 1971 - 1985 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP, A, 50-133791 (Jorge Robert Pierre Marie) 23 October 1975 (23. 10. 75) & US, A, 3955153 & GB, A, 1456348 | 1-3 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ³ |
|---|---|
| October 17, 1985 (17. 10. 85) | October 28, 1985 (28. 10. 85) |
| International Searching Authority ¹ | Signature of Authorized Officer ³⁰ |
| Japanese Patent Office | |

Form PCT/ISA/210 (second sheet) (October 1981)